# EUROPEAN PATENT APPLICATION

(11) **EP 4 578 683 A1**
(43) Date of publication of application: **02.07.2025**
(21) Application number: 24774548.2
(22) Date of filing: 20.02.2024
(51) Int. Cl.: B60K 6/36, B60K 6/38, B60K 6/405, B60K 6/48, B60K 17/28, B60K 17/356, B60K 25/06

(54) **MOTOR DRIVE DEVICE**

(30) Priority: 22.03.2023 JP 2023045297
(71) Applicant: IJTT Co., Ltd., Yokohama-shi Kanagawa 221-0056 (JP)
(72) Inventor: HAMANAKA Yoshihisa, Ebina-shi, Kanagawa 243-0434 (JP); KATO So, Ebina-shi, Kanagawa 243-0434 (JP); ISHIKAWA Tomohiro, Ebina-shi, Kanagawa 243-0434 (JP)
(74) Representative: Schaumburg und Partner Patentanwälte mbB
(86) International application number: PCT/JP2024/006046
(87) International publication number: WO 2024/195403

(57) **Abstract**

Even when a motor is connected to a PTO shaft to make a vehicle hybrid, it is possible to drive a mounted equipment. A motor drive device 100 for outputting motor drive force for a hybrid vehicle comprises a motor 21; a first output shaft 22 configured to be connected to a PTO shaft for extracting engine drive force from the hybrid vehicle; a power transmission mechanism 23 connecting the motor and the first output shaft; a second output shaft 24 configured to be connected to a drive source 11 for a mounted equipment on the hybrid vehicle; and a switching mechanism 25 configured to selectively connect the first output shaft to the second output shaft.

## Description

### BACKGROUND

### Technical Field

This disclosure relates to a motor drive device for outputting motor drive force for a hybrid vehicle.

### Background Art

For example, in vehicles such as trucks, an electric motor may be connected to a PTO (Power Take Off) shaft for extracting engine drive force to make the vehicle hybrid.

### [Prior art documents]

### [Patent documents]

[Patent document 1] JP2020-32754A

### SUMMARY

### Technical Problem

However, if this is done, a mounted equipment mounted on the vehicle cannot be driven by the PTO shaft. In other words, since the PTO shaft is used to transmit the motor drive force, the PTO shaft cannot be used for its original purpose of driving the mounted equipment.

The present disclosure has been made in view of the above circumstances, and its purpose is to provide a motor drive device that enables drive of mounted equipment even when a motor is connected to a PTO shaft to make the vehicle hybrid.

### Solution to Problem

According to one aspect of the present disclosure, there is provided a motor drive device for outputting motor drive force for a hybrid vehicle, comprising: a motor; a first output shaft configured to be connected to a PTO shaft for extracting engine drive force from the hybrid vehicle; a power transmission mechanism connecting the motor and the first output shaft; a second output shaft configured to be connected to a drive source for a mounted equipment on the hybrid vehicle; and a switching mechanism configured to selectively connect the first output shaft to the second output shaft.

Preferably, the first output shaft and the second output shaft are disposed coaxially, and the switching mechanism includes: a first spline provided on an outer periphery of the first output shaft; a second spline provided on an outer periphery of the second output shaft; a sleeve movable between a second position where the sleeve meshes with the second spline only and a first position where the sleeve meshes with both the first spline and the second spline; and a sleeve drive member that drives the sleeve.

Preferably, the switching mechanism includes an actuator that drives the sleeve drive member.

Preferably, the second output shaft is configured to be coaxially connected to an input shaft of the drive source.

Preferably, the second output shaft is configured to be directly connected to an input shaft of the drive source.

Preferably, the second output shaft is configured to be connected to an input shaft of the drive source in an offset state.

Preferably, the motor drive device comprises a housing for containing the motor, the first output shaft, the power transmission mechanism, the second output shaft, and the switching mechanism.

Preferably, the housing has a seat surface for directly mounting the drive source.

Preferably, the drive source is a hydraulic pump.

According to the present disclosure, even when a motor is connected to a PTO shaft to make the vehicle hybrid, it is possible to drive a mounted equipment.

### BRIEF DESCRIPTION OF THE DRAWINGS

Fig. 1 is a schematic plan view of a vehicle to which a motor drive device is applied;
Fig. 2 is a side cross-sectional view of the motor drive device;
Fig. 3 is an enlarged view of a main portion of Fig. 2;
Fig. 4 is a rear view showing the vicinity of a seat surface of the motor drive device; and
Fig. 5 is a schematic view showing a modified example.

### DESCRIPTION OF THE EXAMPLE EMBODIMENTS

Embodiments of the present disclosure will be described below with reference to the attached drawings. It should be noted that the present disclosure is not limited to the following embodiments.

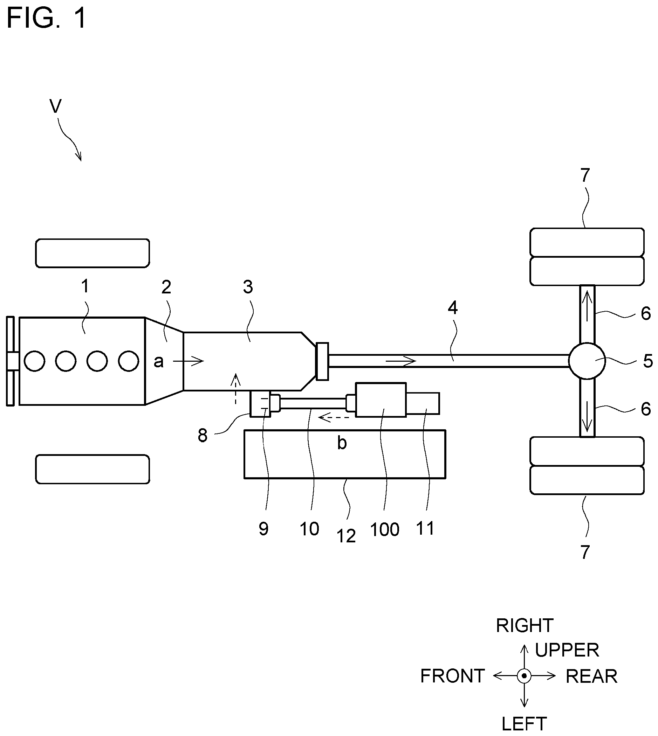

Fig. 1 shows a vehicle V to which a motor drive device 100 according to this embodiment is applied. The vehicle V is a parallel type hybrid vehicle (HEV) capable of running on one or both of the driving force of an engine (internal combustion engine) 1 and the driving force of an electric motor, and in this embodiment, it is a commercial vehicle, specifically a truck. However, the type of vehicle is arbitrary. Front, rear, left, right, upper and lower directions of the vehicle V are indicated in the Figs..

The vehicle V includes an engine 1, a clutch assembly 2 connected to a crankshaft of the engine 1, an automatic transmission 3 connected to an output shaft of the clutch assembly 2, a propeller shaft 4 connected to an output shaft of the automatic transmission 3, a final reduction gear 5 connected to an output section of the propeller shaft 4, and left and right rear wheels 7 connected to the left and right output shafts of the final reduction gear 5 via axles 6. As shown by the solid arrow a, the driving force of the engine 1 is transmitted to the clutch assembly 2, the automatic transmission 3, the propeller shaft 4, the final reduction gear 5, the axle 6, and the rear wheels 7 in this order. The transmission system of the engine driving force from the engine 1 to the rear wheels 7 is called an engine drive system.

The clutch assembly 2 includes a torque converter and a lock-up clutch. The automatic transmission 3 is a type that automatically changes the speed of a manual transmission using an actuator. The clutch assembly 2 and the automatic transmission 3 are combined to form an AMT (Automated Manual Transmission). The final reduction gear 5 includes a differential gear that distributes the driving force to the left and right axles 6.

The automatic transmission 3 is provided with a PTO device 8 for extracting the engine driving force. An output shaft of the PTO device 8 is a PTO shaft 9. The PTO shaft 9 is directed rearward. An output shaft of the motor drive device 100 is connected to the PTO shaft 9 via a propeller shaft 10. A motor for driving the vehicle is provided in the motor drive device 100. As shown by dashed arrow b, the motor driving force is transmitted from the output shaft of the motor drive device 100 to the propeller shaft 10, the PTO shaft 9, the PTO device 8, and the automatic transmission 3 in this order, and then to the rear wheels 7 via the same path as above.

Meanwhile, a mounted equipment (not shown) is attached to the vehicle V. The mounted equipment is, for example, a crane, a water supply pump, or a garbage collector, but is not limited to these. A hydraulic pump 11, which is a drive source for the mounted equipment, is attached to the motor drive device 100. In this embodiment, the motor for driving the vehicle is used to drive the hydraulic pump 11, and to operate the mounted equipment.

In this embodiment, the propeller shaft 10 is located in front of the motor drive device 100, and the hydraulic pump 11 is located behind the motor drive device 100. However, these layouts are arbitrary, and other arrangement methods are also possible.

The vehicle V includes a battery 12 that serves as the power source for the motor, and a motor control device (not shown) that controls the current between the battery 12 and the motor. The motor is a motor generator. The motor control device controls the current that flows from the battery 12 to the motor when the vehicle is driven by the motor, and controls the current that flows from the motor to the battery 12 during regenerative braking.

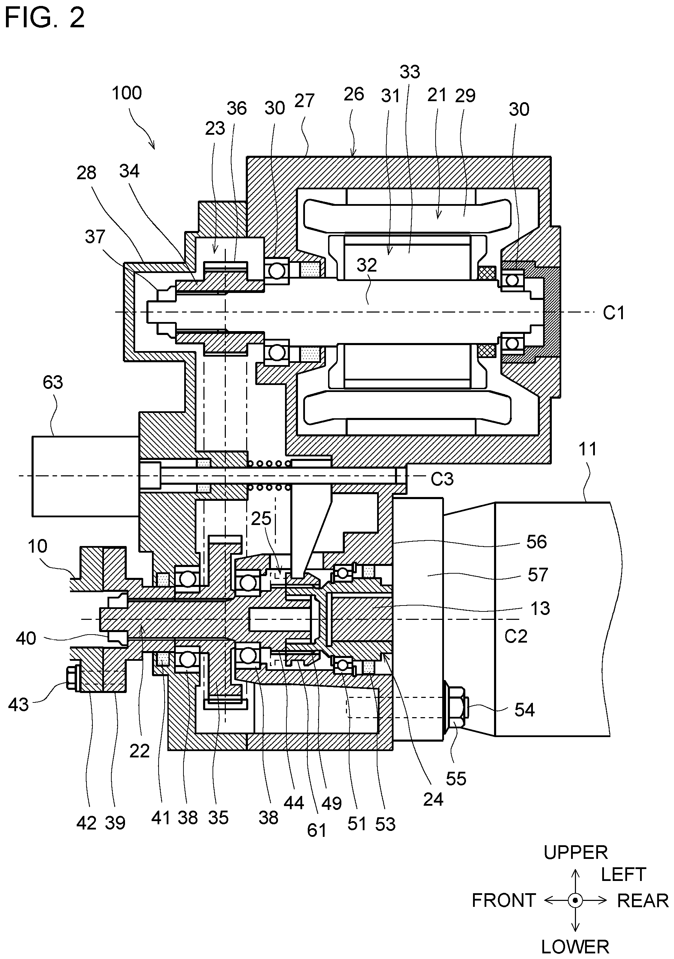

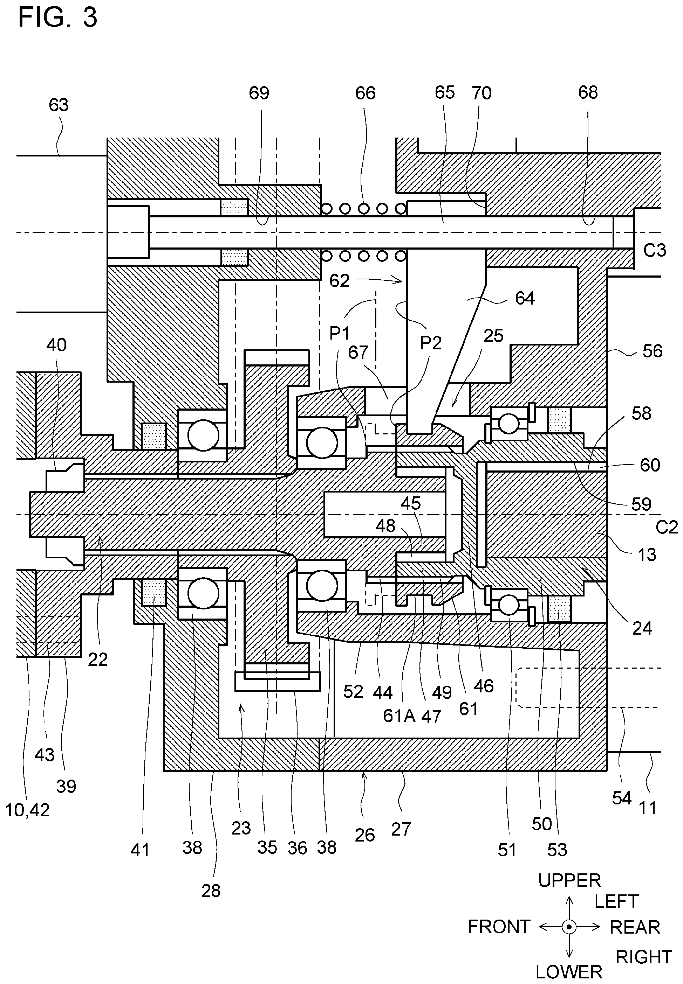

Next, the motor drive device 100 will be explained with reference to Figs. 2 and 3. Fig. 2 is a left side cross-sectional view showing the entire motor drive device 100, and Fig. 3 is an enlarged view of the main parts of Fig. 2. For convenience, front, rear, left, right, upper and lower directions are defined as the same as the directions of the vehicle V.

The motor drive device 100 includes the motor 21 as described, a first output shaft 22 configured to be connected to the PTO shaft 9, a power transmission mechanism 23 that connects the motor 21 and the first output shaft 22, a second output shaft 24 configured to be connected to the hydraulic pump 11, and a switching mechanism 25 configured to selectively connect the first output shaft 22 to the second output shaft 24.

In the illustrated example, the first output shaft 22 is actually connected to the PTO shaft 9 via the propeller shaft 10. The second output shaft 24 is actually connected to the input shaft 13 of the hydraulic pump 11.

In this embodiment, the second output shaft 24 is configured to be coaxially connected to the input shaft 13 of the hydraulic pump 11. The second output shaft 24 is configured to be directly connected to the input shaft 13 of the hydraulic pump 11.

The motor drive device 100 includes a housing 26. The housing 26 contains the motor 21, the first output shaft 22, the power transmission mechanism 23, the second output shaft 24, and the switching mechanism 25. This allows the motor drive device 100 to be integrated or unitized.

Inside the housing 26, the motor 21 is disposed above the first output shaft 22 and the second output shaft 24, and the first output shaft 22 and the second output shaft 24 are disposed coaxially. Reference character C1 indicates a central axis of the motor 21, and reference character C2 indicates a common central axis of the first output shaft 22 and the second output shaft 24. The axis C1 is parallel to the axis C2 and is positioned above the axis C2. The axes C1 and C2 extend in the front-rear direction.

The housing 26 includes a housing main body 27, and a housing lid 28 that is attached to the housing main body 27 and closes a front end open portion thereof.

The motor 21 includes a stator 29 made of a permanent magnet fixed to the housing body 27, and a rotor 31 rotatably attached to the housing body 27 via a pair of bearings 30. The rotor 31 includes a motor output shaft 32, and an electromagnet 33 attached to its outer periphery.

In this embodiment, the power transmission mechanism 23 is configured as a chain and sprocket mechanism. However, this is not limited to this, and it may be configured as a gear mechanism or the like.

A driving sprocket 34 is attached to the tip or front end of the motor output shaft 32, and a driven sprocket 35 is attached to the middle part of the first output shaft 22. A chain 36 is wound around these sprockets 34, 35. The driven sprocket 35 has a greater number of teeth than the driving sprocket 34, and transmits the rotation of the motor 21 to the first output shaft 22 at a reduced speed. The driving sprocket 34 is spline-fitted to the motor output shaft 32 and fixed by a nut 37.

The first output shaft 22 is rotatably supported by a pair of bearings 38 attached to the housing body 27 and the housing cover 28, respectively. A cylindrical flange member 39 is attached to the first output shaft 22 adjacent to the front side of the driven sprocket 35. The driven sprocket 35 and the flange member 39 are spline-fitted to the first output shaft 22 and fixed by a nut 40. A first seal member 41 seals the gap between the flange member 39 and the housing cover 28.

The flange member 39 protrudes forward from the housing cover 28, and a flange 42 of the propeller shaft 10 is fixed to the flange member 39 by multiple bolts 43 (only one shown).

The driven sprocket 35 is disposed between the pair of bearings 38. On the other hand, the base end or rear end of the first output shaft 22 protrudes rearward from the rear bearing 38. At this protruding rear end, the first output shaft 22 can be connected to the second output shaft 24 by the switching mechanism 25.

The base end or rear end of the first output shaft 22 is formed in a generally cylindrical shape with an open rear end. At the rear end, a first spline 44 is provided on the outer periphery, and a reduced diameter tube section 45 is provided behind the first spline 44.

The second output shaft 24 is also formed in a generally cylindrical shape, and its interior is divided into front and rear parts by a partition wall 46. The front side tube section 47 in front of the partition wall 46 is fitted to the outside of the reduced diameter tube section 45 with a gap therebetween, and is rotatably supported by the reduced diameter tube section 45 via a plurality of needle bearings 48.

A second spline 49 similar to the first spline 44 is provided on the outer periphery of the front side tube section 47, and is located adjacent to and behind the first spline 44.

The rear side tube section 50, which is located rearward of the partition wall 46, is rotatably supported by the housing body 27 via a bearing 51.

The housing body 27 is formed with a tubular section 52 that protrudes into the housing to support the first output shaft 22 and the second output shaft 24. The bearings 38 and 51 are attached to this tubular section 52. The right end of the tubular section 52 is open, and the gap between the inner peripheral surface of the tubular section 52 and the second output shaft 24 is sealed by a seal member 53.

The hydraulic pump 11 is directly attached to the rear end surface of the housing body 27 with a plurality of stud bolts 54 and nuts 55, with its input shaft 13 facing forward.

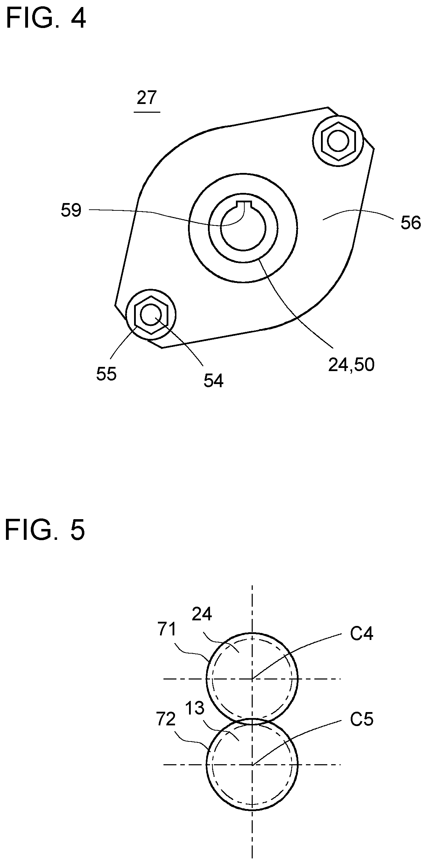

As shown in FIG. 4, the rear end surface of the housing body 27 is formed with a seat surface 56 for seating or surface contacting the front end surface of the hydraulic pump 11. The seat surface 56 in this embodiment is formed in a substantially spindle shape, and a flange 57 of the hydraulic pump 11, which has a substantially similar shape, is seated on the seat surface 56. The flange 57 is fixed in close contact with the seat surface 56 of the housing body 27 by two diagonally arranged sets of stud bolts 54 and nuts 55.

The input shaft 13 of the hydraulic pump 11 is inserted into the tubular section 52 and is coaxially fitted inside the rear side tube section 50 of the second output shaft 24. Key grooves 58, 59 are formed in the input shaft 13 of the hydraulic pump 11 and the rear side tube section 50 of the second output shaft 24, respectively. A key 60 is inserted into these key grooves 58, 59, and the input shaft 13 and the rear side tube section 50 are connected so as to be movable in the axial C2 direction but not movable in the rotational direction.

The switching mechanism 25 includes the first spline 44 and the second spline 49 as described, a sleeve 61, and a sleeve drive member 62 that drives the sleeve 61. The sleeve 61 is movable between a second position P2 (shown by a solid line) where the sleeve 61 meshes only with the second spline 49, and a first position P1 (shown by a virtual line) where the sleeve 61 meshes with both the first spline 44 and the second spline 49.

The switching mechanism 25 also includes an actuator 63 that drives the sleeve drive member 62.

In this embodiment, a switching mechanism 25 similar to a manual transmission for a vehicle is used. The sleeve 61 is ring-shaped, has a spline formed on its inner circumference, and is normally fitted to the outside of the second spline 49 so that it can move in the axial C2 direction but cannot move in the rotational direction. A fork groove 61A is formed on the outer circumference of the sleeve 61.

The sleeve drive member 62 includes a shift fork 64, a tip of which is engaged with the fork groove 61A, a fork rod 65 to which a base end of the shift fork 64 is fixed, and a coil spring 66 as a biasing member that biases the shift fork 64 and the fork rod 65 toward the second position P2.

The shift fork 64 extends vertically, and its base end is positioned higher than the tip end. An insertion hole 67 for inserting the shift fork 64 is provided in the tubular portion 52 of the housing body 27. The fork rod 65 is inserted slidably in the direction of axis C3 through guide holes 68, 69 provided in the housing body 27 and the housing lid 28, respectively. The axis C3 is parallel to the axis C2.

The coil spring 66 is fitted to the outside of the fork rod 65 and is sandwiched in a compressed state between the housing cover 28 and the shift fork 64, urging the shift fork 64 toward the second position P2 and pressing it against the stopper surface 70 of the housing body 27.

The actuator 63 of this embodiment is composed of an electromagnetic solenoid that drives the fork rod 65 in the direction of axis C3. The actuator 63 is attached to the front end surface of the housing cover 28, and the front end of the fork rod 65 is inserted into it. The solid line in the Figure shows the state when the actuator 63 is off (stopped). When the actuator 63 is turned on (operated), the actuator 63 attracts and pulls the fork rod 65 forward in the direction of axis C3, moving the fork rod 65 and the sleeve 61 to the first position P1 as shown by the imaginary line.

Next, the operation of the motor drive device 100 will be described.

When the vehicle V is running normally, the actuator 63 is turned off, the sleeve 61 is positioned at the second position P2, and is engaged only with the second spline 49. This separates the first output shaft 22 and the second output shaft 24 from each other and allows them to rotate relative to each other.

The PTO device 8 is equipped with a PTO clutch, which connects and disconnects the PTO shaft 9 to and from the automatic transmission 3. When the vehicle V is running normally, the PTO clutch is connected. This connects the PTO shaft 9 to the automatic transmission 3 so that power can be transmitted. The on/off state of the actuator 63 and the connected/disconnected state of the PTO clutch can be easily switched by operating a switch in the driver's cab, for example.

When the motor 21 is driven in this state, the rotational driving force of the motor 21 is transmitted to the first output shaft 22 via the motor output shaft 32, driving sprocket 34, chain 36, and driven sprocket 35. The rotational driving force is then transmitted from the first output shaft 22 to the automatic transmission 3 via the propeller shaft 10, PTO shaft 9, and PTO device 8, and is then finally transmitted to the rear wheels 7.

In addition, as with a normal parallel hybrid vehicle, the driving force of the engine 1 and the driving force of the motor 21 can be used together to drive the rear wheels 7. Alternatively, regenerative braking can be performed by driving the motor 21 by the rear wheels 7 when the vehicle V is decelerating, and the electric power generated by the motor 21 can be collected in the battery 12. In addition, it is possible to control the engine 1 and the motor 21 in various control modes that are normally performed in a parallel hybrid vehicle.

When the vehicle V is running normally, the second output shaft 24 is separated from the first output shaft 22, so the second output shaft 24 does not rotate and the hydraulic pump 11 is not operated. Therefore, the mounted equipment is also stopped.

On the other hand, when the mounted equipment is operated, the vehicle V is stopped, the actuator 63 is turned on, the sleeve 61 is positioned at the first position P1, and is engaged with both the first spline 44 and the second spline 49. As a result, the first output shaft 22 and the second output shaft 24 are connected to each other and cannot rotate relative to each other.

In addition, the PTO clutch is disconnected. As a result, the PTO shaft 9 is unable to transmit power to the automatic transmission 3, and the rotational drive force of the motor 21 is no longer transmitted to the automatic transmission 3.

When the motor 21 is driven in this state, the rotational driving force of the motor 21 is transmitted to the input shaft 13 of the hydraulic pump 11 via the motor output shaft 32, driving sprocket 34, chain 36, driven sprocket 35, first output shaft 22, sleeve 61, and second output shaft 24. Thereby the hydraulic pump 11 is operated, and the mounted equipment is operated.

In this way, according to this embodiment, even if the motor 21 is connected to the PTO shaft 9 to make the vehicle V a hybrid, it is possible to drive the mounted equipment.

In addition, if the motor 21 stops its operation due to electrical trouble or the like, the sleeve 61 can be positioned at the first position P1 to directly connect the first output shaft 22 and the second output shaft 24, and the hydraulic pump 11 can be driven by the engine 1 as in a normal PTO. In this case, the driving force of the engine 1 is transmitted to the input shaft 13 of the hydraulic pump 11 via the automatic transmission 3, the PTO device 8, the PTO shaft 9, the propeller shaft 10, the first output shaft 22, the sleeve 61, and the second output shaft 24.

Even if an abnormality occurs in which the motor 21 does not operate, the hydraulic pump 11 and the mounted equipment can be operated by the engine 1, and a fail-safe function can be achieved.

In addition, when the motor 21 is normal, the hydraulic pump 11 and the mounted equipment can be intentionally operated by the engine 1. At this time, the motor 21 is driven to rotate, so that the motor 21 can function as a generator and charge the battery 12.

Incidentally, when a motor for driving vehicle is connected to the PTO shaft to make the vehicle hybrid, it is also possible to install another motor dedicated to the mounted equipment. However, this increases the number of motors, which increases manufacturing costs and reduces marketability due to the reduced vehicle space.

According to this embodiment, the motor 21 for driving vehicle is also used to drive the mounted equipment, so this problem can be avoided.

Furthermore, in this embodiment, the housing 26 is provided with a seat surface 56 for directly mounting the hydraulic pump 11. This makes it possible to directly mount the hydraulic pump 11 to the housing 26, eliminating the need for intermediate members (adapters, couplings, etc.) for indirectly mounting the hydraulic pump 11 to the housing 26, and reducing manufacturing costs.

Although the embodiment of the present disclosure has been described above in detail, there are many other possible embodiments and modifications of the present disclosure.

(1) For example, in the above embodiment, the second output shaft 24 is configured to be coaxially connected to the input shaft 13 of the hydraulic pump 11. However, this is not limited to this, and the second output shaft 24 may be configured to be connected to the input shaft 13 of the hydraulic pump 11 in an offset state.

Fig. 5 shows a modification in this case in a simplified manner. The center axis C4 of the second output shaft 24 and the center axis C5 of the input shaft 13 are offset, and gears 71, 72 are provided on the outer periphery of the second output shaft 24 and the input shaft 13. These gears 71, 72 are meshed, and the second output shaft 24 is rotated, thereby the input shaft 13 is rotated. In the illustrated example, the input shaft 13 is disposed below the second output shaft 24, but the layout of these can be changed as desired. An idle gear (not shown) may be provided between the gears 71, 72 to increase the offset amount. A power transmission mechanism other than a gear mechanism (such as a chain mechanism or a belt mechanism) may also be used.

For example, when the second output shaft 24 and the input shaft 13 cannot be disposed coaxially due to the vehicle layout or other reasons, such an offset arrangement is effective.

(2) In the above embodiment, an electromagnetic solenoid is used for the actuator 63, but other actuators (such as an electric motor) can also be used. The sleeve drive member 62 can be operated automatically by the actuator 63 or manually.

The embodiments of the present disclosure are not limited to the above-mentioned embodiments, and all modifications, applications, and equivalents encompassed by the concept of the present disclosure as defined by the claims are included in the present disclosure. Therefore, the present disclosure should not be interpreted as being limited, and can be applied to any other technology that falls within the scope of the concept of the present disclosure.

## Claims

1. A motor drive device for outputting motor drive force for a hybrid vehicle, comprising:
a motor;
a first output shaft configured to be connected to a PTO shaft for extracting engine drive force from the hybrid vehicle;
a power transmission mechanism connecting the motor and the first output shaft;
a second output shaft configured to be connected to a drive source for a mounted equipment on the hybrid vehicle; and
a switching mechanism configured to selectively connect the first output shaft to the second output shaft.

2. The motor drive device according to claim 1, wherein
the first output shaft and the second output shaft are disposed coaxially, and
the switching mechanism includes:
a first spline provided on an outer periphery of the first output shaft;
a second spline provided on an outer periphery of the second output shaft;
a sleeve movable between a second position where the sleeve meshes with the second spline only and a first position where the sleeve meshes with both the first spline and the second spline; and
a sleeve drive member that drives the sleeve.

3. The motor drive device according to claim 2, wherein
the switching mechanism includes an actuator that drives the sleeve drive member.

4. The motor drive device according to claim 1, wherein
the second output shaft is configured to be coaxially connected to an input shaft of the drive source.

5. The motor drive device according to claim 1, wherein
the second output shaft is configured to be directly connected to an input shaft of the drive source.

6. The motor drive device according to claim 1, wherein
the second output shaft is configured to be connected to an input shaft of the drive source in an offset state.

7. The motor drive device according to claim 1, comprising
a housing for containing the motor, the first output shaft, the power transmission mechanism, the second output shaft, and the switching mechanism.

8. The motor drive device according to claim 7, wherein
the housing has a seat surface for directly mounting the drive source.

9. The motor drive device according to claim 1, wherein
the drive source is a hydraulic pump.
